# EUROPÄISCHE PATENTSCHRIFT

(11) **EP 3 436 712 B1**
(45) Veröffentlichungstag und Bekanntmachung des Hinweises auf die Patenterteilung: **24.06.2020**
(21) Anmeldenummer: 17714760.0
(22) Anmeldetag: 31.03.2017
(51) Int. Cl.: F16C 17/03, F16C 33/10

(54) **KIPPSEGMENTLAGER**
TILTING PAD BEARING
PALIER À SEGMENT BASCULANT

(30) Priorität: 01.04.2016 DE 102016106005
(43) Veröffentlichungstag der Anmeldung: 06.02.2019
(73) Patentinhaber: ZOLLERN BHW GLEITLAGER GmbH & Co. KG, 38124 Braunschweig (DE)
(72) Erfinder: DRIFTMEIER, Klaus, 38229 Salzgitter (DE); BERTRAM, Mathias, 37191 Katlenburg-Lindau (DE); KOCH, Thilo, 37115 Duderstadt (DE)
(74) Vertreter: Gramm, Lins & Partner Patent- und Rechtsanwälte PartGmbB
(86) Internationale Anmeldenummer: PCT/EP2017/057686
(87) Internationale Veröffentlichungsnummer: WO 2017/167961

(56) Entgegenhaltungen:
- DE-A1-102012 002 713
- DE-A1-102014 209 062
- US-A- 4 714 357
- US-A- 5 271 676
- US-A- 5 795 076
- US-A- 5 879 085
- US-A1- 2014 270 607

## Beschreibung

Die Erfindung betrifft ein Kippsegmentlager zum Lagern einer Welle, das ein Gehäuse mit einer Innenseite und einer Gehäuselängsachse und wenigstens ein Kippsegment mit einer Rückseite aufweist, die der Innenseite des Gehäuses zugewandt ist, wobei eine an der Rückseite des wenigstens einen Kippsegments angeordnete Erhöhung derart in einer in der Innenseite des Gehäuses angeordneten Vertiefung angeordnet ist, dass eine an der Erhöhung vorhandene erste Kontaktfläche an einer zweiten Kontaktfläche an einem Grund der Vertiefung anliegt.

Derartige Lager sind aus dem Stand der Technik seit langem bekannt und beispielsweise in der US 2014/270 607 A1, der US 5,879,085 A und der US 5,795,076 A beschrieben. Ähnliche Ausgestaltungen finden sich in der DE 10 2012 002 713 A1, der US 5,271,676 A und der US 4,714,357 A. Sie verfügen über wenigstens ein Kippsegment, bevorzugt wenigstens zwei voneinander in Umfangsrichtung beabstandete Kippsegmente, die jeweils eine Lagerfläche aufweisen. Sie sind zumeist mit Öl geschmiert, das einen Schmierfilm bildet, der sich im Schmierspalt zwischen der Lagerfläche eines jeden der Kippsegmente und der zu lagernden Welle befindet. Je nach Rotationsgeschwindigkeit der zu lagernden Welle schwimmt die Welle auf diesem Ölfilm auf, wodurch sich eine jeweils geänderte Kippsituation der einzelnen Kippsegmente ergibt. Diese liegen folglich bei unterschiedlichen Rotationsgeschwindigkeiten der zu lagernden Welle in unterschiedlichen Winkeln an der Gehäuseinnenwand an.

Herkömmlicherweise verfügt ein jedes der Kippsegmente über eine Anlagefläche, mit der es an der Innenseite des Gehäuses anliegt. Über Neigungen und Wölbungen der einzelnen Anlageflächen lässt sich eine Verkippbarkeit erreichen, die nicht ausschließlich in eine Kipprichtung begrenzt sein muss. Es sind rotationssymmetrische Anlageflächen bekannt, die beispielsweise kugelsegmentförmig gewölbt sind, so dass eine Verkippung in nahezu jede Richtung möglich ist.

Durch die sich gegebenenfalls schnell drehende Welle, die in dem Kippsegmentlager gelagert wird, wird ein Drehmoment auf die einzelnen Kippsegmente übertragen. Daher ist es notwendig, eine Verrutsch- oder Verdrehsicherung vorzusehen, die verhindert, dass die einzelnen Kippsegmente relativ zum Gehäuse in Rotation versetzt werden. Eine derartige Verdrehsicherung kann beispielsweise in Form eines Dorns ausgebildet sein, der von der Gehäuseinnenwand nach radial innen ragt und in eine dafür vorgesehene Ausnehmung im Kippsegment eingreift. Nachteilig ist jedoch, dass dies einen erhöhten konstruktiven Aufwand zur Folge hat, da einerseits der Dorn so ausgebildet sein muss, dass ein Verrutschen und Verdrehen der Kippsegmente relativ zur Gehäuseinnenwand sicher vermieden wird, gleichzeitig jedoch eine Verkippung der Kippsegmente relativ zur Gehäuseinnenwandung möglich ist, um eine optimale Lagerung der zu lagernden Welle zu erreichen. Nachteilig ist jedoch, dass die Ausnehmung im Kippsegment eine Materialschwächung darstellt und daher die Bauteilfestigkeit reduziert.

Aus dem Stand der Technik ist es zudem bekannt, in der Rückseite des Kippsegmentes eine Vertiefung und an der Gehäuseinnenwand eine Erhöhung bzw. einen Vorsprung vorzusehen, der so ausgebildet ist, dass er in die Vertiefung im Kippsegment eingreifen kann. Auf diese Weise liegen die beiden Bauteile nur innerhalb dieser Vertiefung aneinander an, wodurch gleichzeitig die Verdrehsicherung erreicht und die Anlagenflächen gebildet werden. Durch den Krümmungsunterschied der beiden Kontaktflächen kann sich die Längsachse des Kippsegmentes an der Wellenlängsachse ausrichten. Die Welle übt ein Drehmoment über einen Schmierfilmdruck auf das Segment in Rotationsrichtung aus, wodurch sich die zweite Kontaktfläche ergibt. Bei unverkippter Lage des Segmentes ist dies ein linienförmiger Kontakt zwischen der Erhöhung an der Gehäuseinnenwand und der Vertiefung im Kippsegment. Nachteilig ist, dass bei zunehmendem Kippwinkel des Segmentes um die Wellenachse die Kontaktlänge zwischen der Erhebung und der Vertiefung sowie die Ausprägung der Kontaktfläche verändert wird. Diese Änderung kann sich nachteilig auf das Betriebsverhalten des Lagers auswirken.

Eine andere Form eines Kippsegmentlagers ist aus der DE 10 2014 209 062 A1 bekannt.

Der Erfindung liegt daher die Aufgabe zugrunde, ein Kippsegmentlager so weiter zu entwickeln, dass es einfach und damit kostengünstig herstellbar ist und der Wartungsaufwand sowie der Verschleiß verringert wird.

Die Erfindung löst die gestellte Aufgabe durch ein Kippsegmentlager gemäß dem Oberbegriff des Anspruchs 1, das sich dadurch auszeichnet, dass die Vertiefung eine hohlzylinderförmige Seitenwand und einen kreisförmigen Boden aufweist und die Erhöhung um eine Erhöhungslängsachse herum rotationssymmetrisch ist, wobei die Erhöhungslängsachse senkrecht auf der Gehäuselängsachse steht und die Erhöhung eine bezüglich der Erhöhungslängsachse nach radial außen hervorstehende Wulst aufweist.

Durch diese überraschend einfache Konstruktion werden mehrere Vorteile erreicht. Durch die Konstruktion wird einerseits erreicht, dass von der Gehäuseinnenwand kein Element, sei es ein Dorn oder eine Erhöhung, nach radial innen hervorsteht, wodurch eine Materialschwächung im Kippsegment hervorgerufen werden könnte. Durch die Konstruktion wird andererseits erreicht, dass der Anlagebereich, in dem die beiden Kontaktflächen aneinander anliegen, relativ zu dem aus den Stand der Technik bekannten Vorrichtungen nach radial außen verschoben wird. Dadurch wird überraschenderweise ein verringerter Verschleiß erreicht.

Vorzugsweise sind die erste Kontaktfläche und/oder die zweite Kontaktfläche gewölbt ausgebildet. Dabei verfügen die beiden Kontaktflächen über unterschiedliche Krümmungsradien einer Krümmung oder Wölbung, so dass eine Verkippung relativ zu einander möglich ist. Je nach Konstruktion kann die erste Kontaktfläche und/oder die zweite Kontaktfläche beispielsweise kugelsegmentförmig oder zylindersegmentförmig ausgebildet sein, wenn eine Verkippung in mehr als einer Raumrichtung oder nur in einer Raumrichtung gewünscht oder technisch notwendig ist. Selbstverständlich können sowohl die erste Kontaktfläche an der Erhöhung des Kippsegmentes als auch die zweite Kontaktfläche am Boden der Vertiefung an der Innenseite des Gehäuses gewölbt ausgebildet sein. Es ist jedoch ausreichend, wenn lediglich eine der beiden Kontaktflächen gewölbt ausgebildet ist, so dass die jeweils andere eben oder plan ausgebildet werden kann, wodurch die Herstellung vereinfacht und somit der Kosten- und Herstellungsaufwand reduziert wird.

Erfindungsgemäß verfügt die Vertiefung über eine hohlzylinderförmige Seitenwand und einen kreisförmigen Boden. Insbesondere vorzugsweise verfügt die Vertiefung über eine Vertiefungslängsachse, die senkrecht auf der Gehäuselängsachse steht und diese schneidet. Bezüglich dieser Vertiefungslängsachse ist die Vertiefung vorzugsweise rotationssymmetrisch ausgebildet, so dass insbesondere bei wenigstens einer kugelsegmentförmig gewölbten Kontaktfläche eine Verkippung in alle Richtungen möglich ist.

Erfindungsgemäß ist die Erhöhung um eine Erhöhungslängsachse herum rotationssymmetrisch ausgebildet, wobei die Erhöhungslängsachse senkrecht auf der Gehäuselängsachse steht. Insbesondere die Kombination einer rotationssymmetrisch ausgebildeten Vertiefung und einer rotationssymmetrisch ausgebildeten Erhöhung verfügt über viele Vorteile.

Als besonders vorteilhaft hat sich die erfindungsgemäße Lösung herausgestellt, in der die Erhöhung eine bezüglich der Erhöhungslängsachse nach radial außen hervorstehende Wulst aufweist. Diese verfügt vorteilhafterweise über eine kugelringförmige Außenfläche, wobei besonders vorteilhafterweise diese kugelringförmige Außenfläche einen Durchmesser aufweist, der einen geringfügig kleineren Durchmesser, insbesondere um 0,1% bis 5% kleinerer Durchmesser als der des kreisförmigen Bodens der Vertiefung aufweist. Der Unterschied der Durchmesser kann beispielsweise mehrere Zehntel Millimeter bis zu mehreren Millimetern betragen. Auf diese Weise kann gewährleistet werden, dass innerhalb des vorgesehenen Verkippungsbereiches, also innerhalb des Winkelbereiches, um den das Kippsegment relativ zum Gehäuse verkippbar ist, zwischen beiden Bauteilen immer eine Anlagefläche vorliegt, ohne dass die Kippbewegung des Kippsegmentes relativ zum Gehäuse in einer oder mehrerer Raumrichtungen eingeschränkt wäre. Dadurch wird eine sichere, spielreduzierte und sogar spielfreie Lagerung ermöglicht, ohne dass die Bewegungsfreiheit eingeschränkt würde.

Selbstverständlich ist es nicht notwendig, dass die nach außen hervorstehende Wulst eine kugelringförmige Außenfläche aufweist. Insbesondere kann die Wulst eine Wölbung aufweisen, die einen Radius aufweist, der deutlich kleiner ist als der Radius der Erhöhung. Die Außenfläche der Wulst wäre in diesem Fall Teil einer Außenfläche eines Torus und nicht einer Kugel. Natürlich sind auch unregelmäßig geformte Außenflächen der Wulst möglich.

Besonders vorteilhafterweise ist die Vertiefung wenigstens zwei Millimeter, bevorzugt mindestens fünf Millimeter, besonders bevorzugt wenigstens zehn Millimeter tief.

Vorzugsweise ist die Erhöhung durch ein Kontaktbauteil gebildet, das in eine dafür vorhandene Aufnahme an der Rückseite des Kippsegmentes angeordnet ist. Auf diese Weise wird der konstruktive Aufwand nochmals verringert und auch auf diese Weise die Herstellungskosten gesenkt. Selbstverständlich ist es auch möglich, am Boden der Vertiefung ein Bauteil anzuordnen, an dem die zweite Kontaktfläche ausgebildet ist. Auf diese Weise kann beispielsweise die Vertiefung in die Innenseite des Gehäuses eingebracht, beispielsweise eingefräst werden, wobei eine relativ große Fehlertoleranz möglich ist. Anschließend wird ein vorzugsweise längen- und breitenveränderliches Bauteil in die Vertiefung eingesetzt und beispielsweise in dieser verspannt oder verschraubt, so dass die Vertiefung dann durch dieses mit geringer Fehlertoleranz gefertigte Bauteil auf die gewünschten Maße gebracht werden kann.

Mit Hilfe der beiliegenden Zeichnungen wird nachfolgend ein Ausführungsbeispiel der vorliegenden Erfindung näher erläutert. Es zeigen:
- Figuren 1a und 1b: - Schnittdarstellungen durch ein Kippsegmentlager gemäß einem ersten Ausführungsbeispiel der vorliegenden Erfindung,
- Figur 2a und 2b: - vergrößerte Ausschnitte gemäß einem ersten Ausführungsbeispiel der vorliegenden Erfindung,
- Figur 3a und 3b: - vergrößerte Schnittdarstellung gemäß einem zweiten Ausführungsbeispiel der vorliegenden Erfindung und
- Figur 4a und 4b: - vergrößerte Darstellungen gemäß einem dritten Ausführungsbeispiel der vorliegenden Erfindung.

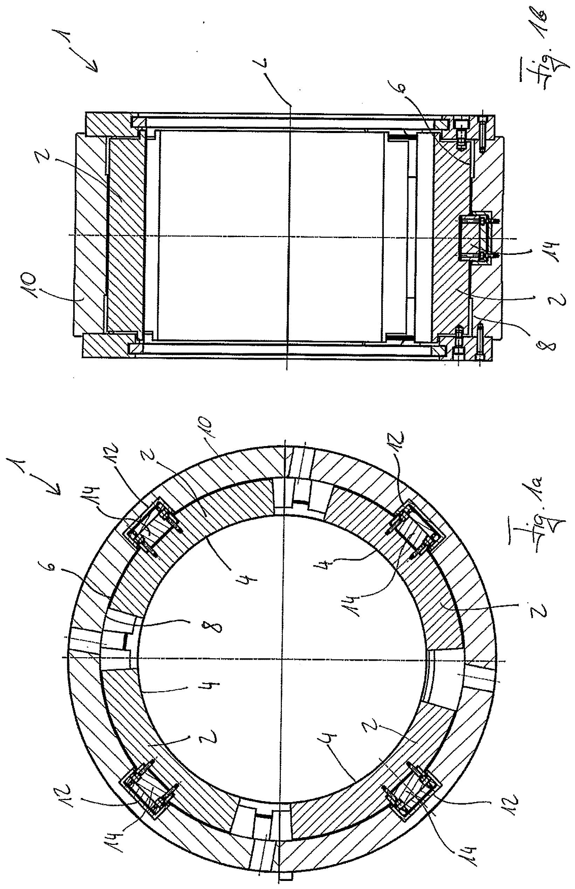

Figur 1a zeigt einen Querschnitt durch ein Kippsegmentlager 1 gemäß einem ersten Ausführungsbeispiel der vorliegenden Erfindung. Man erkennt vier Kippsegmente 2, die über jeweils eine Lagerfläche 4 verfügen. Gegenüber dieser Lagerfläche befindet sich eine Rückseite 6, die einer Innenwand 8 eines Gehäuses 10 zugewandt ist.

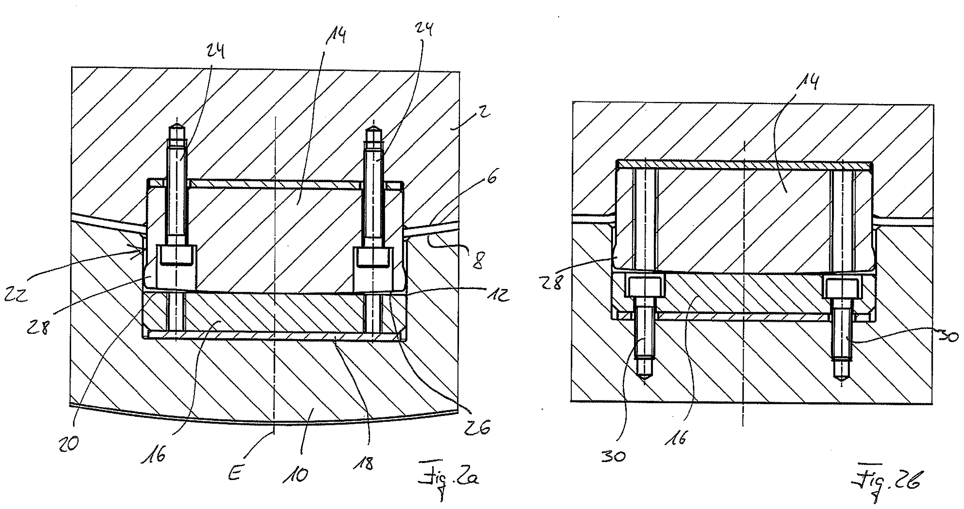

In der Innenwand 8 des Gehäuses 10 befinden sich vier Vertiefungen 12, in die ein Kontaktbauteil 14 hineinragt, das an der Rückseite 6 des Kippsegments 2 angeordnet ist. Diese Bauteile werden in den Figuren 2a bis 4b detaillierter dargestellt.

Figur 1b zeigt eine Schnittdarstellung durch das Kippsegmentlager 1 parallel zur Gehäuselängsachse L. Man erkennt die beiden einander gegenüberliegenden Kippsegmente 2, von denen bei dem unteren das Kontaktbauteil 14 gezeigt ist, das aus der Rückseite 6, die der Innenwand 8 des Gehäuses 10 zugewandt ist, hervorsteht.

Die Figuren 2a und 2b zeigen vergrößere Ausschnitte aus schematischen Schnittdarstellungen entlang der in den Figuren 1a und 1b gezeigten Schnitte. Allerdings zeigen die Figuren ein anderes Ausführungsbeispiel der vorliegenden Erfindung. Das Gehäuse 10 verfügt über eine Innenwand 8, in der sich eine Vertiefung 12 befindet. In dieser befindet sich ein Ausgleichsbauteil 16, das über eine Lagerung 18, die beispielsweise eine Dämpfung oder eine Ausgleichungsmöglichkeit für Fertigungstoleranzen oder zur Einstellung eines Abstandes vorgesehen sein kann, in der Vertiefung 12 angeordnet ist. Die in Figur 2 oben dargestellte Oberfläche dieses Ausgleichsbauteils 16 bildet den Boden der Vertiefung und damit die zweite Kontaktfläche 20.

Das Kippsegment 2 verfügt über eine Rückseite 6, aus der ein Kontaktbauteil 14 hervorsteht, das folglich eine Erhöhung 22 bildet. Das Kontaktbauteil 14 ist im vorliegenden Ausführungsbeispiel über zwei Befestigungsschrauben 24 am Kippsegment 2 befestigt. Die in Figur 2a untere Oberfläche des Kontaktbauteils 14 bildet die erste Kontaktfläche 26, die im Gegensatz zur zweiten Kontaktfläche 20 im in den Figuren 2a und 2b gezeigten Ausführungsbeispiel gewölbt ausgebildet ist.

Im in Figur 2a unteren Bereich verfügt das Kontaktbauteil 14, also die Erhöhung 22, über eine nach außen hervorstehende Wulst 28, die vorteilhafterweise kugelringförmig ausgebildet ist und einen Radius aufweist, der den geringfügig kleineren Durchmesser der Vertiefung 12 aufweist. Im gezeigten Ausführungsbeispiel ist sowohl die Vertiefung 12 als auch die Erhöhung 22 rotationssymmetrisch um eine Erhöhungslängsachse E ausgebildet, die gleichzeitig auch eine Vertiefungslängsachse ist.

Figur 2b zeigt die gleiche Ausführungsform in einer Schnittdarstellung, die dem in Figur 1b gezeigten Schnitts entspricht. Man erkennt, dass auch das Ausgleichsbauteil 16 über zwei Schrauben 30 im Gehäuse 10 befestigt ist.

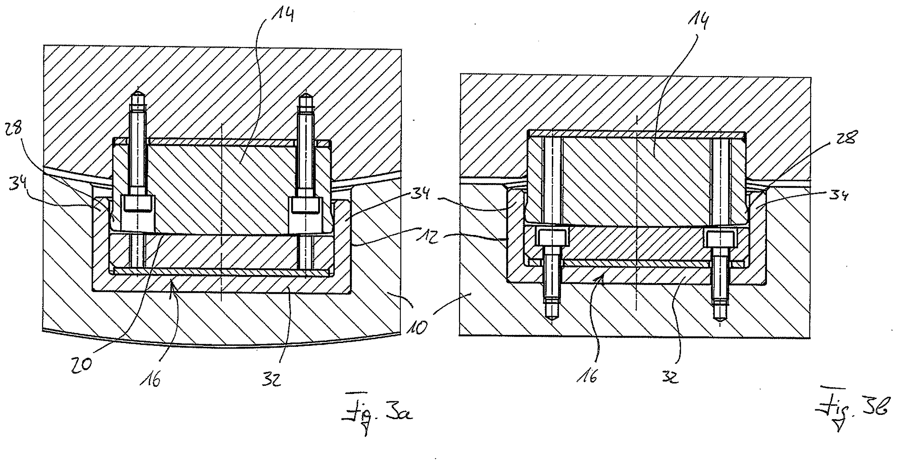

Die Figuren 3a und 3b zeigen die gleichen Schnittdarstellungen wie die Figuren 2a und 2b jedoch für ein anderes Ausführungsbeispiel der vorliegenden Erfindung. Auch hier ist in der Vertiefung 12 im Gehäuse 10 das Ausgleichsbauteil 16 angeordnet, was im vorliegenden Ausführungsbeispiel mehrteilig ausgebildet ist. Es besteht aus einem becher- oder napfförmigen Positionierelement 32, dessen Seitenwand 34 als seitliche Anlage für das Kontaktbauteil 14 dienen. Am Kontaktbauteil 14 befindet sich die Wulst 28, die an der Seitenwand 34 des Positionierelementes 32 anliegt. Im Positionierelement 32 angeordnet ist ein zweites Bauteil, an dem sich die zweite Kontaktfläche 20 befindet.

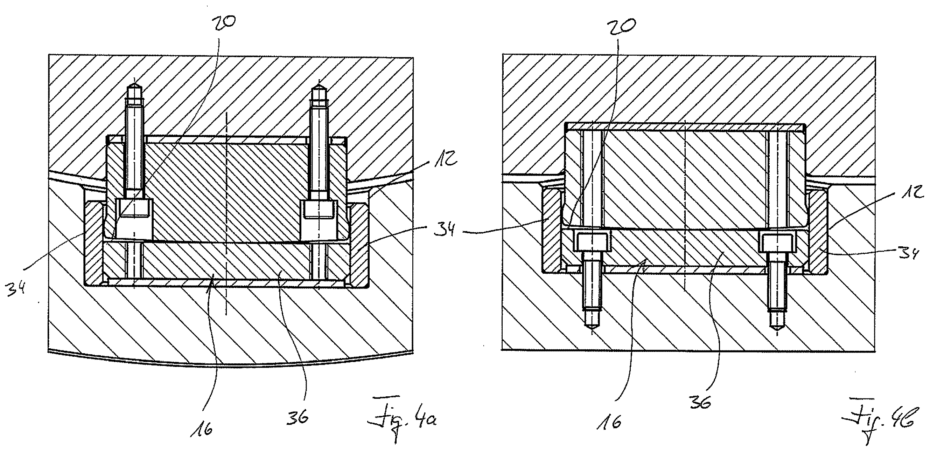

Die Figuren 4a und 4b zeigen die gleichen Schnittdarstellungen für ein weiteres Ausführungsbeispiel der vorliegenden Erfindung. In der Vertiefung 12 sind wieder mehrere Bauteile angeordnet, wobei in diesem Fall das Ausgleichsbauteil 16 mehrteilig ausgebildet ist und aus einem Grundelement 36, an dem sich die zweite Kontaktfläche 20 befindet, und der umlaufenden Seitenwand 34, die auch als Rand des becher- oder napfförmigen Positionierelementes 32 bezeichnet werden kann, besteht.

### Bezugszeichenliste:

- 1: Kippsegmentlager
- 2: Kippsegment
- 4: Lagerfläche
- 6: Rückseite
- 8: Innenwand
- 10: Gehäuse
- 12: Vertiefung
- 14: Kontaktbauteil
- 16: Ausgleichsbauteil
- 18: Lagerung
- 20: zweite Kontaktfläche
- 22: Erhöhung
- 24: Befestigungsschraube
- 26: erste Kontaktfläche
- 28: Wulst
- 30: Schraube
- 32: Positionierelement
- 34: Seitenwand
- 36: Grundelement
- L: Gehäuselängsachse
- E: Erhöhungslängsachse

## Patentansprüche

1. Kippsegmentlager (1) zum Lagern einer Welle, das
ein Gehäuse (10) mit einer Innenseite (8) und einer Gehäuselängsachse (L) und wenigstens ein Kippsegment (2) mit einer Rückseite (6) aufweist, die der Innenseite (8) des Gehäuses (10) zugewandt ist,
wobei eine an der Rückseite (6) des wenigstens einen Kippsegments (2) angeordnete Erhöhung (22) derart in einer in der Innenseite (8) des Gehäuses (10) angeordneten Vertiefung (12) angeordnet ist, dass eine an der Erhöhung (22) vorhandene erste Kontaktfläche (26) an einer zweiten Kontaktfläche (20) an einem Grund der Vertiefung (22) anliegt, wobei die Erhöhung (22) um eine Erhöhungslängsachse (E) herum rotationssymmetrisch ist und die Erhöhungslängsachse (E) senkrecht auf der Gehäuselängsachse (L) steht, **dadurch gekennzeichnet, dass** die Vertiefung (12) eine hohlzylinderförmige Seitenwand und einen kreisförmigen Boden aufweist und die Erhöhung (22) eine bezüglich der Erhöhungslängsachse (E) nach radial außen hervorstehende Wulst (28) aufweist.

2. Kippsegmentlager (1) nach Anspruch 1, **dadurch gekennzeichnet, dass** die erste Kontaktfläche (26) und/oder die zweite Kontaktfläche (20) gewölbt sind.

3. Kippsegmentlager (1) nach Anspruch 1 oder 2, **dadurch gekennzeichnet, dass** die Wulst (28) eine kugelringförmige Außenfläche aufweist.

4. Kippsegmentlager (1) nach Anspruch 3, **dadurch gekennzeichnet, dass** die kugelringförmige Außenfläche einen geringfügig kleineren, insbesondere um 0,1% bis 5% kleineren Durchmesser aufweist, als der Bodendurchmesser des kreisförmigen Bodens der Vertiefung (12).

5. Kippsegmentlager (1) nach einem der vorstehenden Ansprüche, **dadurch gekennzeichnet, dass** die Vertiefung (12) mindestens zwei Millimeter, bevorzugt mindestens fünf Millimeter, besonders bevorzugt wenigstens zehn Millimeter tief ist.

6. Kippsegmentlager (1) nach einem der vorstehenden Ansprüche, **dadurch gekennzeichnet, dass** die Erhöhung (22) durch ein Kontaktbauteil (14) gebildet ist, das in eine dafür vorhandene Aufnahme in der Rückseite (6) des Kippsegment (2) angeordnet ist.

## Claims

1. Tilting-pad bearing (1) for mounting a shaft, said tilting-pad bearing (1) having a housing (10) having an internal side (8) and a housing longitudinal axis (L), and at least one tilting pad (2) having a rear side (6) which faces the internal side (8) of the housing (10), wherein an elevation (22) that is disposed on the rear side (6) of the at least one tilting pad (2) is disposed in a depression (12) that is disposed in the internal side (8) of the housing (10) in such a manner that a first contact face (26) that is available on the elevation (22) bears on a second contact face (20) on a bottom of the depression (22), wherein the elevation (22) is rotationally symmetrical about an elevation vertical axis (E) and the elevation vertical axis (E) is perpendicular to the housing longitudinal axis (L),
**characterized in that** the depression (12) has a hollow-cylindrical lateral wall and an arcuate base, and the elevation (22) has a bead (28) which in terms of the elevation vertical axis (E) projects radially outwards.

2. Tilting-pad bearing (1) according to Claim 1,
**characterized in that** the first contact face (26) and/or the second contact face (20) are/is curved.

3. Tilting-pad bearing (1) according to Claim 1 or 2,
**characterized in that** the bead (28) has a spherical-annular external face.

4. Tilting-pad bearing (1) according to Claim 3,
**characterized in that** the spherical-annular external face has a slightly smaller diameter, in particular a diameter which is smaller by 0.1% to 5%, than the base diameter of the circular base of the depression (12).

5. Tilting-pad bearing (1) according to one of the preceding claims, **characterized in that** the depression (12) is at least two millimetres, preferably at least five millimetres, particularly preferably at least ten millimetres, deep.

6. Tilting-pad bearing (1) according to one of the preceding claims, **characterized in that** the elevation (22) is formed by a contact component (14) which is disposed in a receptacle available to this end in the rear side (6) of the tilting pad (2).

## Revendications

1. Palier à segment basculant (1) pour monter un arbre, comprenant un boîtier (10) ayant une face intérieure (2) et un axe longitudinal de boîtier (L), et au moins un segment basculant (2) ayant une face arrière (6) tournée vers la face intérieure (8) du boîtier (10),
dans lequel
une élévation (22) disposée sur la face arrière (6) dudit au moins un segment basculant (2) est disposée dans un renfoncement (12) disposé dans une face intérieure (8) du boîtier (10) de telle sorte qu'une première surface de contact (26) existant sur l'élévation (22) vient en appui contre une seconde surface de contact (20) sur un fond du renfoncement (22),
l'élévation (22) est à symétrie de révolution autour d'un axe longitudinal d'élévation (E) et l'axe longitudinal d'élévation (E) est perpendiculaire à l'axe longitudinal de boîtier (L),
**caractérisé en ce que**
le renfoncement (12) présente une paroi latérale cylindrique creuse et un fond circulaire, et l'élévation (22) présente un bourrelet (28) faisant saillie radialement vers l'extérieur par rapport à l'axe longitudinal d'élévation (E).

2. Palier à segment basculant (1) selon la revendication 1,
**caractérisé en ce que**
la première surface de contact (26) et/ou la seconde surface de contact (20) sont bombées.

3. Palier à segment basculant (1) selon la revendication 1 ou 2,
**caractérisé en ce que**
le bourrelet (28) présente une surface extérieure sphérique.

4. Palier à segment basculant (1) selon la revendication 3,
**caractérisé en ce que**
la surface extérieure sphérique présente un diamètre légèrement plus petit, en particulier de 0,1 % à 5 % plus petit que le diamètre du fond circulaire du renfoncement (12).

5. Palier à segment basculant (1) selon l'une des revendications précédentes,
**caractérisé en ce que**
le renfoncement (12) présente une profondeur d'au moins deux millimètres, de préférence d'au moins cinq millimètres, de manière particulièrement préférée d'au moins dix millimètres.

6. Palier à segment basculant (1) selon l'une des revendications précédentes,
**caractérisé en ce que**
l'élévation (22) est formée par un composant de contact (14) qui est disposé dans un logement prévu à cet effet dans la face arrière (6) du segment basculant (2).
